# FASCICULE DE BREVET EUROPEEN

(11) **EP 4 140 307 B1**
(45) Date de publication et mention de la délivrance du brevet: **06.05.2026**
(21) Numéro de dépôt: 22191056.5
(22) Date de dépôt: 18.08.2022
(51) Int. Cl.: A21C 1/02, A21C 1/14, B01F 27/84, B01F 27/1123, B01F 27/091

(54) **DISPOSITIF ET ENSEMBLE DE MÉLANGE D'UNE PRÉPARATION BOULANGÈRE, PÂTISSIÈRE OU COSMÉTIQUE**
VORRICHTUNG UND ANORDNUNG ZUM MISCHEN EINER BACK-, KONDITOREI- ODER KOSMETIKMISCHUNG
DEVICE AND ASSEMBLY FOR MIXING A BAKING, PASTRY-MAKING OR COSMETIC PREPARATION

(30) Priorité: 19.08.2021 FR 2108783
(43) Date de publication de la demande: 01.03.2023
(73) Titulaire: VMI, 85600 Montaigu Vendée (FR)
(72) Inventeur: CHEIO DE OLIVEIRA, José, 85600 St Hilaire de Loulay (FR)
(74) Mandataire: Germain Maureau

(56) Documents cités:
- EP-A1- 0 323 767
- EP-A1- 3 298 899
- EP-A2- 0 057 673
- FR-A1- 2 799 397

## Description

### Domaine Technique

Le présent exposé se rapporte à un dispositif de mélange d'une préparation pour réaliser des produits de boulangerie, de pâtisserie ou cosmétiques.

### Technique antérieure

Il est connu d'utiliser des dispositifs de mélange comprenant une cuve rotative et un outil rotatif. Ce type de dispositif est robuste, et simple à fabriquer. La combinaison de la rotation de la cuve et de l'outil rotatif permet, par exemple lors d'un pétrissage d'une préparation, un mélange homogène de la préparation lors de la phase de pré-mélange, également appelée la phase de frasage, et a une bonne structuration du réseau de gluten et une bonne aération de la préparation lors de la phase de pétrissage.

De plus en plus, le secteur de la boulangerie/pâtisserie ou de la cosmétique souhaite contrôler les différents paramètres intervenant lors du pétrissage, par exemple la température ou l'atmosphère dans la cuve (pression, injection de gaz comme de l'azote par exemple), ce qui est difficile à réaliser lorsque la cuve est rotative.

Il existe donc un besoin en ce sens.

Le document EP-A1-3 298 899 divulgue un dispositif selon le préambule de la revendication 1.

### Exposé de l'invention

Le présent exposé a pour but de remédier à tout ou partie des inconvénients mentionnés ci-dessus.

A cet effet, le présent exposé concerne un dispositif de mélange configuré pour mélanger une préparation boulangère, pâtissière ou cosmétique comprenant :
- une cuve de mélange configurée pour recevoir des ingrédients destinés à être mélangés pour former une préparation ;
- un premier outil de mélange configuré pour plonger au moins partiellement dans la cuve de mélange et conçu pour mélanger les ingrédients, le premier outil de mélange étant configuré pour être entraîné en rotation autour d'un premier axe de rotation ;
- un deuxième outil de mélange configuré pour plonger au moins partiellement dans la cuve de mélange et conçu pour mélanger les ingrédients, le deuxième outil de mélange étant configuré pour être entraîné en rotation autour d'un deuxième axe de rotation, les premier et deuxième axes de rotation étant sensiblement coaxiaux.

Par sensiblement coaxiaux, il est entendu que les premier et deuxième axes de rotation peuvent être coaxiaux ou être décalés latéralement l'un de l'autre d'une distance inférieure à 20 mm.

De préférence, les premier et deuxième axes de rotation peuvent être décalés latéralement l'un de l'autre d'une distance inférieure à 10 mm.

On entend par préparation, une composition cosmétique, ou bien une préparation boulangère ou pâtissière.

On comprend que le mélange des ingrédients par le dispositif de mélange peut comprendre le pétrissage d'une préparation dans le cas où la préparation est une préparation boulangère ou pâtissière.

Ainsi, les ingrédients peuvent être mélangés par deux mouvements de rotation, ce qui permet une qualité du mélange optimale, tout en maintenant la cuve fixe. La cuve n'étant pas rotative, elle peut être fermée de façon hermétique et ainsi l'atmosphère dans la cuve lors de l'opération de mélange (par exemple la température, l'augmentation de la pression ou la création d'un vide, la présence de gaz tel que de l'azote dans l'atmosphère) peut être contrôlée. Le contrôle de l'atmosphère au sein de la cuve permet par exemple de réaliser des produits différents. Ces dispositions permettent également de simplifier la fabrication du dispositif de mélange.

Dans certains modes de réalisation, le dispositif de mélange comprend en outre un premier mécanisme d'entraînement configuré pour entraîner en rotation le premier outil de mélange autour du premier axe de rotation, et un deuxième mécanisme d'entraînement configuré pour entraîner en rotation le deuxième outil de mélange autour du deuxième axe de rotation.

Ainsi, les mouvements des premier et deuxième outils de mélange peuvent être indépendants l'un de l'autre, ce qui améliore la qualité du mélange de la préparation.

Dans certains modes de réalisation, le premier outil de mélange et le deuxième outil de mélange sont configurés pour être entraînés en rotation selon un même sens de rotation ou selon deux sens de rotation opposés.

Ainsi, la qualité du mélange de la préparation est améliorée.

Par exemple, le premier outil de mélange et le deuxième outil de mélange sont configurés pour être entraînés en rotation à des vitesses de rotation différentes.

Par exemple, le premier outil de mélange et le deuxième outil de mélange sont entraînés dans le même sens de rotation mais à des vitesses de rotation différentes ce qui permet d'obtenir deux mouvements de mélange et ainsi d'améliorer la qualité du mélange de la préparation.

Par exemple, si le premier outil de mélange est configuré pour être entraîné en rotation selon un sens de rotation horaire, le deuxième outil de mélange peut être configuré pour être entraîné en rotation selon un sens de rotation horaire ou bien antihoraire.

Le premier outil de mélange comprend une première portion de contact disposée dans la cuve de mélange, la première portion de contact comprenant une première partie de mélange s'étendant vers un fond de la cuve de mélange, et dans lequel le deuxième outil de mélange comprend une deuxième portion de contact disposée dans la cuve de mélange, la deuxième portion de contact comprend une deuxième partie de mélange s'étendant vers un fond de la cuve de mélange.

Les première et deuxième parties de mélange permettent le mélange de la préparation.

Les deuxièmes parties de mélange sont incurvées.

Dans certains modes de réalisation, au moins l'une des première et deuxième parties de mélange comprend une portion s'étendant selon une direction axiale par rapport aux premier et deuxième axes de rotation respectivement.

Dans certains modes de réalisation, au moins l'une des première et deuxième parties de mélange comprend une portion inclinée par rapport à une direction axiale par rapport aux premier et deuxième axes de rotation.

Par exemple, au moins l'une des première et deuxième parties de mélange comprend au moins une portion en forme de spirale.

Par exemple, au moins l'une des première et deuxième parties de mélange comprend au moins une portion en forme de portion de spirale.

Par exemple, les première et deuxième parties de mélange sont en forme de spirale. Ainsi, Lorsque les premier et deuxième outils de mélange sont entraînés en rotation, les première et deuxième parties de mélange se croisent donc de façon progressive, ce qui limite les chocs sur la préparation. La forme des première et deuxième parties de mélange permet donc de pousser progressivement la préparation vers le bas ce qui permet d'obtenir une bonne qualité de mélange.

Dans certains modes de réalisation, au moins l'une des première et deuxième parties de mélange comprend une portion déportée configurée pour former un passage pour la préparation entre les première et deuxième parties de mélange.

Par exemple, les première et deuxième portions de mélange sont excentrées par rapport aux premier et deuxième axes de rotation.

Par exemple, les première et deuxième portions de mélange sont symétriques par rapport aux premier et deuxième axes de rotation.

Par exemple, les première et deuxième portions de mélange sont opposées par rapport aux premier et deuxième axes de rotation.

Les formes particulières des première et deuxième parties de mélange permettent d'améliorer la qualité du mélange de la préparation.

Au moins l'une des première et deuxième portions de contact comprend une partie de raclage s'étendant selon une direction radiale par rapport aux premier et deuxième axes de rotation et étant adjacente au fond de la cuve de mélange.

La partie de raclage permet d'éviter que la préparation ne stagne au fond de la cuve de mélange.

Dans certains modes de réalisation, la cuve de mélange comporte une ouverture de vidange, et une trappe de vidange qui est montée mobile entre une position de vidange dans laquelle la trappe de vidange libère l'ouverture de vidange et le contenu de la cuve de mélange peut être déversé en dehors de ladite cuve de mélange à travers l'ouverture de vidange, et une position d'obturation dans laquelle la trappe de vidange obture l'ouverture de vidange.

Ainsi, la préparation peut aisément être récupérée à la fin d'une opération de mélange et de pétrissage.

Par exemple, l'ouverture de vidange est ménagée sur une paroi de fond de la cuve de mélange.

Par exemple, la trappe de vidange est disposée sous la cuve de mélange.

Dans certains modes de réalisation, le premier mécanisme d'entraînement est configuré pour entraîner directement le premier outil de mélange en rotation, et le deuxième mécanisme d'entraînement est configuré pour entraîner directement le deuxième outil de mélange en rotation.

Ainsi, la vitesse de rotation des premier et deuxième outils de mélange est mieux maîtrisée et les actionneurs peuvent être plus facilement dimensionnés.

Dans certains modes de réalisation, le premier outil de mélange comprend une première portion d'entraînement configurée pour être entraînée en rotation autour du premier axe de rotation par le premier mécanisme d'entraînement, et le deuxième outil de mélange comprend une deuxième portion d'entraînement, configurée pour être entraînée en rotation autour du deuxième axe de rotation par le deuxième mécanisme d'entraînement, la première portion d'entraînement étant disposée autour de la deuxième portion d'entraînement.

Les première et deuxième portions d'entraînement permettent de transmettre le mouvement de rotation induit par les premier et deuxième mécanismes d'entraînement respectivement aux première et deuxième portions de contact respectivement.

Par exemple, les première et deuxième portions d'entraînement sont des broches.

Par exemple, la première portion de contact est configurée pour être fixée de manière amovible à la première portion d'entraînement, et la deuxième portion de contact est configurée pour être fixée de manière amovible à la deuxième broche d'entraînement.

Dans certains modes de réalisation, le dispositif de mélange comporte en outre un capot de fermeture configuré pour fermer de façon hermétique la cuve de mélange.

Le capot de fermeture permet de fermer la cuve de mélange de façon hermétique et ainsi de contrôler les paramètres de pétrissage.

Dans certains modes de réalisation, le capot de fermeture comprend un orifice de passage, les première et deuxième broches d'entraînement étant configurées pour s'étendre à travers ledit orifice de passage.

Dans certains modes de réalisation, le dispositif de mélange comprend un système de chauffage de la cuve de mélange.

Par exemple, la cuve de mélange comprend une paroi interne et une paroi externe délimitant entre elles un espace. Le système de chauffage est configuré pour faire passer un fluide caloporteur dans l'espace et ainsi de chauffer la cuve de mélange.

Dans certains modes de réalisation, le dispositif de mélange comprend un système d'aspiration et de soufflage d'air et/ou de gaz dans la cuve de mélange.

Ainsi, la pression à l'intérieur de la cuve de mélange peut être contrôlée et il est possible d'injecter un gaz tel que de l'azote dans la cuve de mélange.

Par exemple, le premier outil de mélange comprend deux deuxièmes parties s'étendant vers le fond de la cuve de mélange, les deux deuxièmes parties présentant chacune une forme incurvée, et une troisième partie s'étendant radialement vers l'extérieur de la cuve de mélange et reliée à l'une des deux deuxièmes parties, et le deuxième outil de mélange comprend deux deuxièmes parties s'étendant vers le fond de la cuve de mélange, les deux deuxièmes parties présentant chacune une forme incurvée, et une troisième partie s'étendant radialement vers l'extérieur de la cuve de mélange et reliée à l'une des deux deuxièmes parties.

Par exemple, la forme incurvée de chacune des deux deuxièmes parties du premier outil de mélange s'étend à une distance radiale constante du premier axe de rotation, et dans lequel la forme incurvée de chacune des deux deuxièmes parties du deuxième outil de mélange s'étend à une distance radiale constante du deuxième axe de rotation.

Par exemple la troisième partie du premier outil de mélange comprend deux surfaces supérieures, tournées vers le haut de la cuve, par exemple inclinées l'une par rapport à l'autre, et une surface inférieure tournée vers le fond de la cuve, les deux surfaces supérieures et la surface inférieure étant par exemple agencées de sorte à ce que la troisième partie présente une section triangulaire, et la troisième partie du deuxième outil de mélange comprend une surface supérieure, tournée vers le haut de la cuve, et une surface inférieure tournée vers le fond de la cuve, inclinées selon la même inclinaison.

Par exemple, le premier outil de mélange comprend deux premières parties, s'étendant selon la direction radiale par rapport aux premier et deuxième axes de rotation vers l'extérieur, chacune des deux premières parties étant reliée à l'une respective des deuxièmes parties du premier outil de mélange, les deux premières parties s'étendant de manière opposée selon la direction radiale, et le deuxième outil de mélange comprend deux premières parties, s'étendant selon la direction radiale par rapport aux premier et deuxième axes de rotation vers l'extérieur, chacune des deux premières parties étant reliée à l'une respective des deuxièmes parties du deuxième outil de mélange.

Par exemple la cuve de mélange comprend une paroi latérale présentant une forme de cylindre circulaire droit.

Le présent exposé se rapporte en outre à un ensemble de mélange comprenant un dispositif de mélange conforme à l'une quelconque des caractéristiques susmentionnées, et un bâti, la cuve de mélange du dispositif de mélange étant configurée pour être montée sur le bâti, la cuve de mélange étant fixe par rapport au bâti.

Ainsi, la cuve de mélange peut être fermée hermétiquement et le contrôle de l'atmosphère de la cuve lors du mélange de la préparation est amélioré. La cuve de mélange étant fixe, le bâti peut également porter les éléments de cinématique tels que les premier et deuxième mécanismes d'entraînement ou un actionneur du capot de fermeture.

### Brève Description des dessins

Les caractéristiques de l'invention et ses avantages seront mieux compris à la lecture de la description détaillée faite ci-après de différents modes de réalisation de l'invention donnés à titre d'exemples non limitatifs. Cette description fait référence aux pages de figures annexées, sur lesquelles :
Les figures 1 et 2 représentent un exemple de réalisation de l'ensemble de pétrissage.
La figure 3 représente un autre exemple de réalisation de l'ensemble de pétrissage.
La figure 4 représente un autre exemple de réalisation de l'ensemble de pétrissage.
La figure 5 représente une coupe du dispositif de pétrissage.
La figure 6 représente le dispositif de pétrissage.
La figure 7 représente une coupe du dispositif de pétrissage.
La figure 8 représente une première variante des première et deuxième portions de contact.
La figure 9 représente une deuxième variante des première et deuxième portions de contact.
La figure 10 représente une troisième variante des première et deuxième portions de contact.
La figure 11 représente une quatrième variante des première et deuxième portions de contact.
Les figures 12a et 12b représentent une cinquième variante des première et deuxième portions de contact.
Les figures 13a et 13b représentent une sixième variante des première et deuxième portions de contact.
La figure 14 représente le dispositif de mélange vu de dessus, dans lequel la cuve de mélange est fermée par le capot de fermeture.
La figure 15 représente le dispositif de pétrissage, dans lequel la cuve de mélange est fermée par le capot de fermeture.
Les figures 16a à 16d représentent plusieurs vues latérales de la cuve de mélange et de la cinquième variante des première et deuxième portions de contact selon différentes positions angulaires des première et deuxième portions de contact.

### Description des modes de réalisation

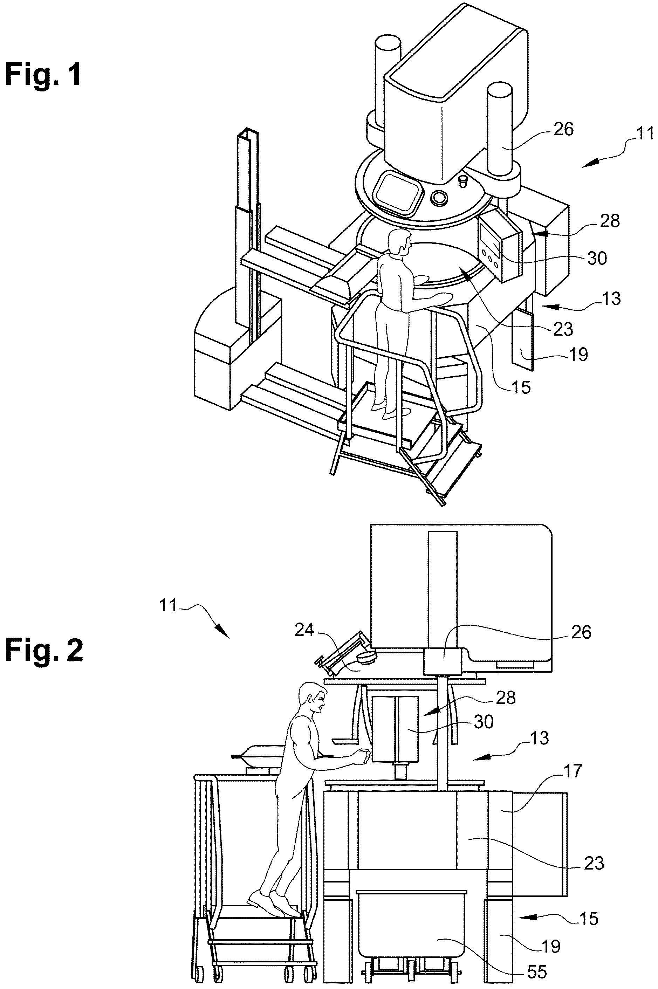

Les figures 1 et 2 représentent un ensemble de mélange 11 comprenant un dispositif de mélange 13 d'une préparation et un bâti 15, sur lequel est monté le dispositif de mélange 13.

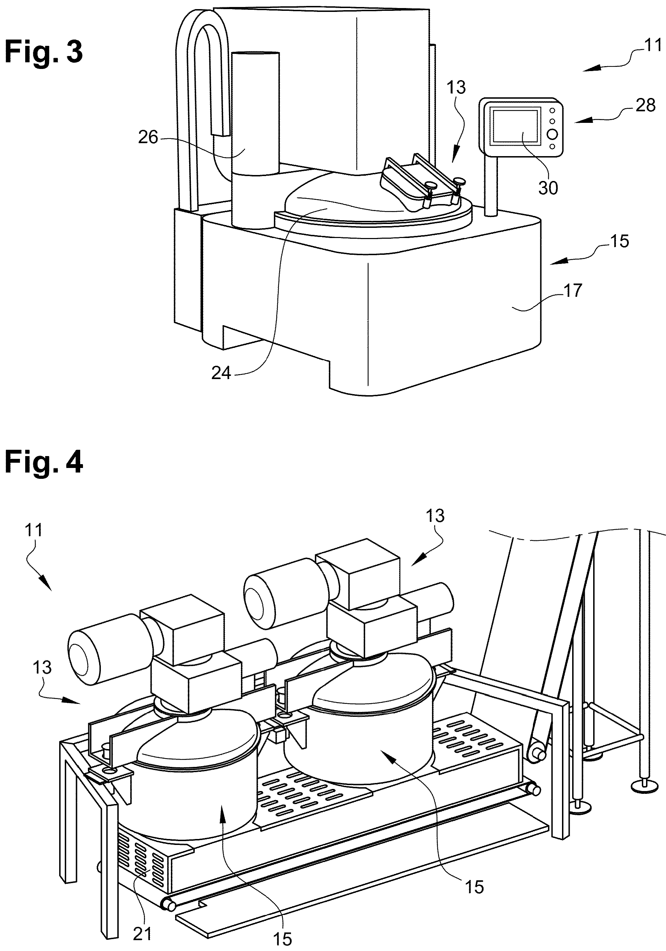

Comme représenté sur les figures 1 et 2, le bâti peut comprendre un corps 17 et des pieds 19. Par exemple, les pieds 19 sont amovibles et peuvent être retirés, comme représenté sur la figure 3. Ainsi, le bâti 15 peut être monté sur une plateforme 21 de l'ensemble de mélange comme représenté sur la figure 4. Dans l'exemple de la figure 4, l'ensemble de mélange 11 peut comprendre deux dispositifs de mélange 13 montés sur la plateforme 21.

Le dispositif de mélange 13 comprend une cuve de mélange 23 configurée pour recevoir des ingrédients destinés à être mélangés pour former une préparation. Par exemple, la préparation peut ensuite être transformée en produits boulangers ou pâtissiers.

La cuve de mélange 23 comprend une paroi interne 23a et une paroi externe 23b délimitant entre elles un espace 23c. Les parois interne et externe 23a, 23b forment ainsi une double enveloppe. L'espace 23c permet la circulation d'un fluide caloporteur permettant le chauffage et/ou le refroidissement de la cuve de mélange 23, et ainsi de faire varier la température à l'intérieur de la cuve de mélange 23. La cuve de mélange 23 comprend un fond 23d et une ouverture 23e, débouchant vers l'extérieur.

La cuve de mélange 23 peut comprendre une paroi latérale. La paroi latérale peut définir un espace interne cylindrique, par exemple cylindrique droit, par exemple cylindrique circulaire droit. Le dispositif de mélange 13 peut être configuré de sorte que l'espace interne est par exemple l'espace au sein duquel le ou les ingrédient(s) est ou sont reçu(s) et mélangé(s). L'espace interne peut être défini par la paroi latérale et le fond 23d. La paroi latérale peut être formée par la paroi interne 23a. La paroi latérale, par exemple la paroi interne 23a, peut présenter une forme cylindrique, par exemple cylindrique droite, par exemple cylindrique circulaire droite. Le fond 23d peut présenter une surface plane. La paroi latérale, par exemple la paroi interne 23a peut ainsi par exemple présenter une forme de cylindre, par exemple de cylindre droit, par exemple de cylindre circulaire droit. Les outils de mélange décrits ci-après, en particulier ceux de la cinquième variante, sont particulièrement adaptés pour permettre un mélange efficace avec une cuve de mélange présentant une telle forme cylindrique, en particulier cylindrique droite, en particulier cylindrique circulaire droite.

La paroi latérale, par exemple la paroi interne 23a, peut être reliée au fond 23d, par exemple au moyen d'une arête ou d'une transition douce, par exemple d'un congé. Une telle transition douce, par exemple un tel congé, permet une coordination plus efficace avec les outils de mélange décrits ci-après, en particulier ceux de la cinquième variante. Une telle transition douce, par exemple un congé, permet ainsi d'éviter que des ingrédients s'agrègent à cet endroit. Une telle transition douce, par exemple un congé, facilite en outre le nettoyage de la cuve de mélange 23.

Le dispositif de mélange 13 comprend en outre un premier outil de mélange 25 et un deuxième outil de mélange 27 configurés pour plonger au moins partiellement dans la cuve de mélange 23 et conçus pour mélanger les ingrédients, puis pour mélanger la préparation.

Le premier outil de mélange 25 comprend une première portion de contact 29, configurée pour être au contact de la préparation pour la mélanger puis la mélanger lors d'une opération de mélange. La première portion de contact 29 est configurée pour être disposée dans la cuve de mélange 23 lors d'une opération de mélange. Le premier outil de mélange 25 comprend en outre une première portion d'entraînement 31, solidaire de la première portion de contact 29.

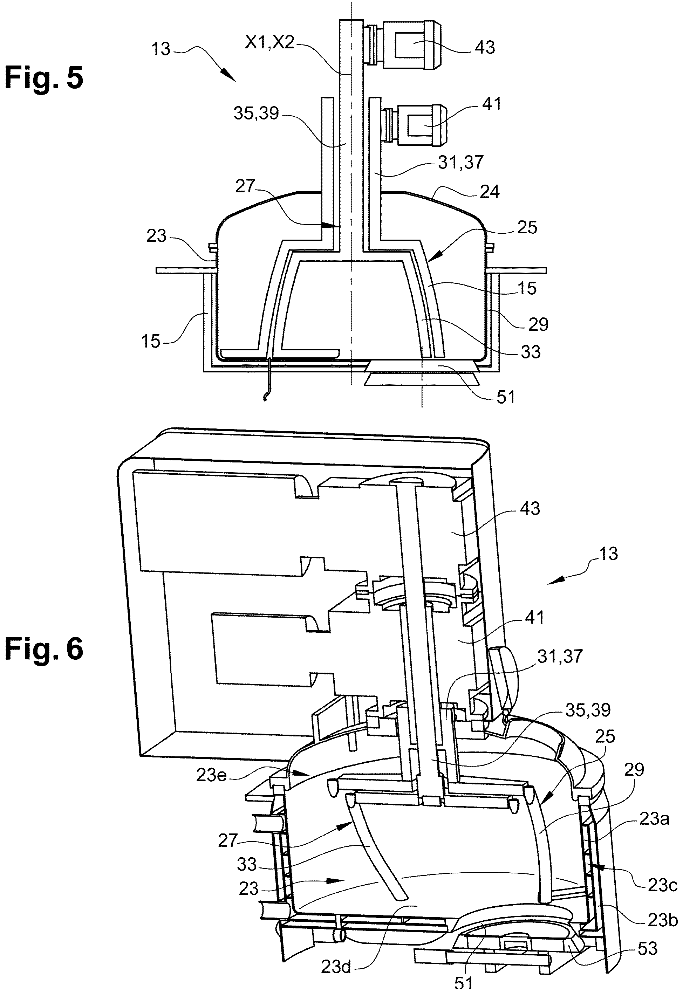

Comme représenté sur la figure 5, par exemple, la première portion de contact 29 est formée avec la première portion d'entraînement 31. Autrement dit, la première portion de contact 29 est venue de matière avec la première portion d'entraînement 31.

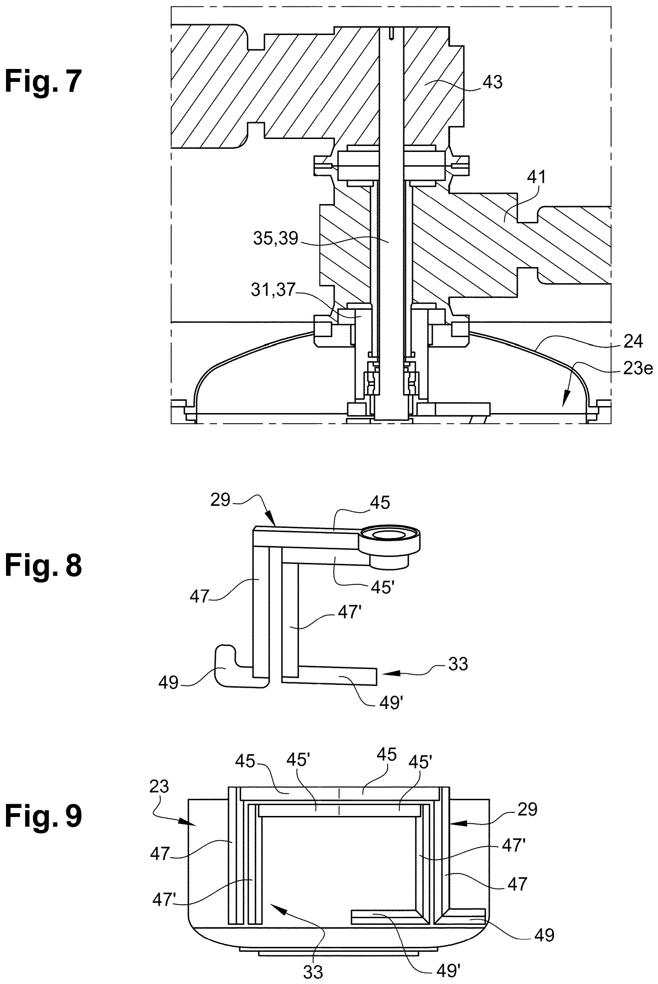

Comme représenté sur les figures 6 et 7, par exemple, la première portion d'entraînement est une broche, dite « première broche » 37. La première portion de contact 29 est montée sur la première broche 37 et est solidaire en mouvement de la première broche 37.

Le deuxième outil de mélange 27 comprend une deuxième portion de contact 33, configurée pour être au contact de la préparation pour la mélanger puis la mélanger lors d'une opération de mélange et de pétrissage. La deuxième portion de contact 33 est configurée pour être dans la cuve de mélange 23 lors d'une opération de mélange et de pétrissage. Le deuxième outil de mélange 27 comprend en outre une deuxième portion d'entraînement 35, solidaire de la deuxième portion de contact 33.

Comme représenté sur la figure 5, par exemple, la deuxième portion de contact 33 est formée avec la deuxième portion d'entraînement 35. Autrement dit, la deuxième portion de contact 33 est venue de matière avec la deuxième portion d'entraînement 35.

Comme représenté sur les figures 6 et 7, par exemple, la deuxième portion d'entraînement est une broche, dite « deuxième broche » 39. La deuxième portion de contact 33 est montée sur la deuxième broche 39 et est solidaire en mouvement de la deuxième broche 39.

Le premier outil de mélange 25 est configuré pour être entraîné en rotation autour d'un premier axe de rotation X1. Le deuxième outil de mélange 27 est configuré pour être entraîné en rotation autour d'un deuxième axe de rotation X2, les premier et deuxième axes de rotation X1, X2 étant sensiblement coaxiaux. Ainsi, les premier et deuxième outils de mélange 25, 27 sont chacun mobiles et la cuve de mélange 23 peut donc rester fixe par rapport au bâti 15.

Ainsi, la première portion d'entraînement 31 est disposée autour de la deuxième portion d'entraînement 35. La première portion d'entraînement 31 a donc, ici, une forme de cylindre. La deuxième portion 35 d'entraînement a ici une forme d'arbre. Le diamètre interne de la première portion d'entrainement 31 est donc supérieur au diamètre de la deuxième portion d'entrainement 35.

Le dispositif de mélange 11 comprend en outre un premier un premier mécanisme d'entraînement 41 configuré pour entraîner en rotation le premier outil de mélange 25 autour du premier axe de rotation X1, et un deuxième mécanisme d'entraînement 43 configuré pour entraîner en rotation le deuxième outil de mélange 27 autour du deuxième axe de rotation X2.

Les premier et deuxième outils de mélange 25, 27 sont mobiles indépendamment l'un de l'autre. Autrement dit, par exemple, le sens de rotation et/ou la vitesse de rotation du premier outil de mélange 25 peuvent être différents du sens de rotation et/ou de la vitesse de rotation du deuxième outil de mélange 27. Le premier outil de mélange 25 et le deuxième outil de mélange 27 peuvent être configurés pour être entraînés en rotation selon un même sens de rotation ou selon deux sens de rotation opposés. Par exemple, le premier outil de mélange 25 peut être configuré pour être entraîné en rotation selon un sens de rotation horaire, et le deuxième outil de mélange 27 peut être configuré pour être entraîné en rotation selon un sens de rotation horaire ou bien antihoraire.

Dans le mode de réalisation représenté en figures 5, 6 et 7 par exemple, le premier mécanisme d'entraînement 41 est configuré pour entraîner directement le premier outil de mélange 25 et le deuxième mécanisme d'entraînement 43 est configuré pour entraîner directement le deuxième outil de mélange 27. Cela permet de maitriser la force transmise aux première et deuxième portions d'entraînement 31, 35 et d'obtenir un meilleur rendement.

Selon un autre mode de réalisation, les premier et deuxième mécanismes d'entraînement 41, 43 peuvent ne pas être directement reliés aux premier et deuxième outils de mélange 25, 27 respectivement et comprendre des renvois avec poulie(s) et/ou courroie(s).

Les première et deuxième portions de contact 29, 33 des premier et deuxième outils de mélange 25, 27 ont une forme complémentaire, de sorte à éviter que les première et deuxième portions de contact 29, 33 ne s'entrechoquent lorsque les premier et deuxième outils de mélange 25, 27 sont entrainés en rotation.

Les premier et deuxième outils de mélange 25, 27 et en particulier les première et deuxième portions de contact 29, 33 sont représentés en figure 8 à 13b.

Les premier et deuxième outils de mélange 25, 27 sont configurés pour permettre un mélange des ingrédients et un mélange de la préparation optimal. En d'autres termes, les première et deuxième portions de contact 29, 33 ont chacune une forme particulière, par exemple pour éviter que les ingrédients ou la préparation ne stagnent lors du mélange ou du pétrissage, ou pour éviter que la préparation ne remonte, ne déborde ou n'éclabousse.

Par exemple, les première et deuxième portions de contact 29, 33 des premier et deuxième outils de mélange 25, 27 peuvent comprendre chacune au moins une première partie 45, 45' s'étendant selon une direction radiale par rapport aux premier et deuxième axes de rotation X1, X2, vers l'extérieur par rapport aux premier et deuxième axes de rotation X1, X2 respectivement, depuis la première ou la deuxième portion d'entrainement, respectivement. La première partie s'étend donc dans une partie haute de la cuve de mélange 23. La première partie peut être sensiblement rectiligne, ou incurvée. Ici, les premières parties 45, 45' s'étendent dans des directions opposées par rapport aux premier et deuxième axes de rotation X1, X2. Ici, les premières parties 45, 45' sont symétriques par rapport aux premier et deuxième axes de rotation X1, X2.

Les première et deuxième portions de contact 29, 31 des premier et deuxième outils de mélange 25, 27 comprennent chacune une deuxième partie 47, 47' s'étendant, depuis la première partie, vers le fond de la cuve. La deuxième partie 47, 47' est incurvée. La deuxième partie 47, 47' peut s'étendre selon une direction axiale par rapport aux premier et deuxième axes de rotation X1 et X2, ou bien être inclinée par rapport à la direction axiale, selon une ou plusieurs directions. La deuxième partie 47 de la première portion de contact 29 peut également être appelée première partie de mélange 47. La deuxième partie 47' de la deuxième portion de contact 33 peut également être appelée deuxième partie de mélange 47'. Les deuxièmes parties 47, 47' peuvent être symétriques par rapport aux premier et deuxième axes de rotation X1, X2.

Au moins l'une des première et deuxième portions de contact 29, 33 des premier et deuxième outils de mélange 25, 27 comprend une troisième partie 49, 49', pouvant également être appelée partie de raclage 49, 49', s'étendant depuis la deuxième partie 47, 47' selon la direction radiale, ou inclinée par rapport à la direction radiale, vers l'extérieur ou vers l'intérieur de la cuve de mélange 23. La troisième partie 49, 49' peut être rectiligne ou incurvée.

Une première variante de réalisation des premier et deuxième outils de mélange 25, 27, ne faisant pas partie de l'invention, est représentée en figure 8. La première portion de contact 29 comprend une première partie 45 rectiligne, s'étendant selon la direction radiale vers l'extérieur, une deuxième partie 47 rectiligne s'étendant selon la direction axiale vers le fond de la cuve de mélange 23 et une troisième partie 49 incurvée, s'étendant globalement radialement vers l'extérieur et dont l'extrémité se prolonge vers le haut de la cuve de mélange 23. La deuxième portion de contact 33 comprend une première partie 45' rectiligne s'étendant selon la direction radiale vers l'extérieur, une deuxième partie 47' s'étendant axialement vers le fond de la cuve de mélange, et une troisième partie 49' s'étendant selon la direction radiale vers l'extérieur. La première partie 45 de la première portion de contact 29 et la première partie 45' de la deuxième portion de contact 33 sont disposées à distance selon la direction axiale de sorte à permettre une rotation des outils dans un sens opposé. La deuxième partie 47 de la première portion de contact 29 et la deuxième partie 47' de la deuxième portion de contact 33 sont disposées à distance selon la direction radiale.

Une deuxième variante de réalisation des premier et deuxième outils de mélange 25, 27, ne faisant pas partie de l'invention, est représentée en figure 9. La deuxième variante de réalisation diffère de la première variante de réalisation en ce que la première portion de contact 29 comprend deux premières parties 45, s'étendant de manière opposée selon la direction radiale. La première portion de contact 29 comprend deux deuxièmes parties 47 s'étendant selon la direction axiale vers le fond de la cuve de mélange 23, chacune étant reliée à l'une des premières parties 45. La première portion de contact 29 comprend une troisième partie 49 s'étendant radialement vers l'extérieur et reliée à l'une des deuxièmes parties 47. La deuxième portion de contact 33 comprend deux premières parties 45', s'étendant de manière opposée selon la direction radiale. La deuxième portion de contact 33 comprend deux deuxièmes parties 47' s'étendant selon la direction axiale vers le fond de la cuve de mélange 23, chacune étant reliée à l'une des premières parties 45'. La deuxième portion de contact 33 comprend une troisième partie 49' s'étendant radialement vers l'intérieur et reliée à l'une des deuxièmes parties 47'.

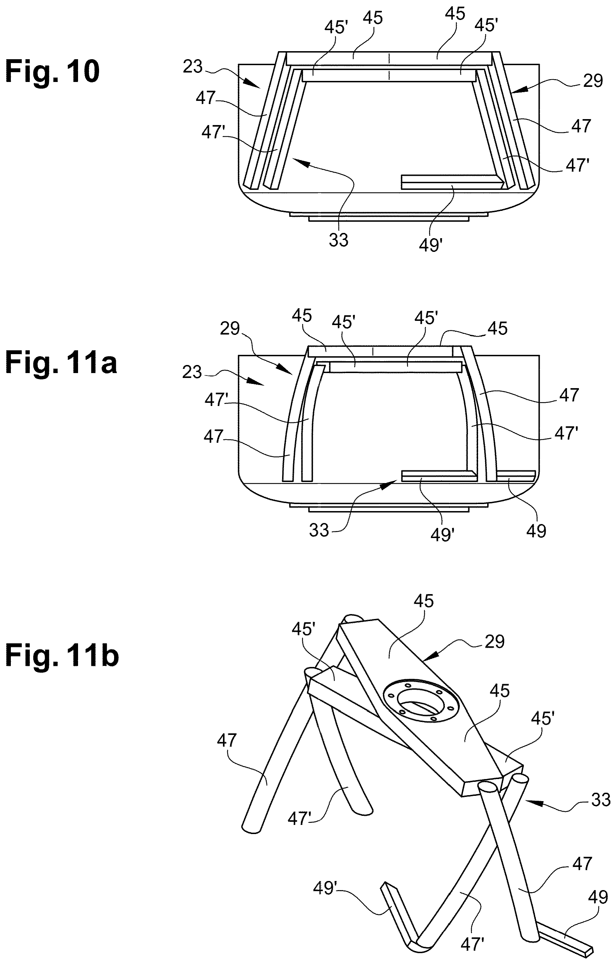

Une troisième variante de réalisation des premier et deuxième outils de mélange 25, 27, ne faisant pas partie de l'invention, est représentée en figure 10. La troisième variante de réalisation diffère de la deuxième variante de réalisation en ce que les deuxièmes parties 47, 47' de la première portion de contact 29 et de la deuxième portion de contact 33 sont inclinées depuis les premières parties 45, 45', vers le fond de la cuve de mélange 23 vers l'extérieur.

Une quatrième variante de réalisation des premier et deuxième outils de mélange 25, 27, ne faisant pas partie de l'invention, est représentée en figures 11a et 11b. Cette quatrième variante de réalisation diffère de la troisième variante de réalisation en ce que les deuxièmes parties 47, 47' de la première portion de contact 29 et de la deuxième portion de contact 33 sont inclinées depuis les premières parties 45, 45', vers le fond de la cuve de mélange 23 selon plusieurs directions.

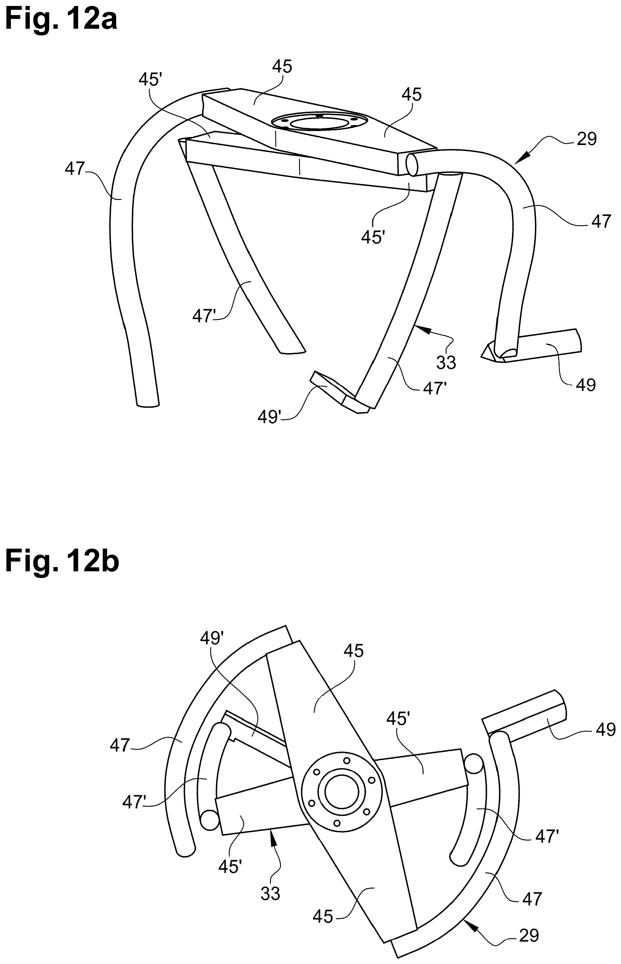

Une cinquième variante de réalisation des premier et deuxième outils de mélange 25, 27 est représentée en figures 12a et 12b. Cette cinquième variante de réalisation diffère de la quatrième variante de réalisation en ce que les deuxièmes parties 47, 47' de la première portion de contact 29 et de la deuxième portion de contact 33 sont incurvées. Les deuxièmes parties 47, 47' sont, ici, chacune en forme de spire. Lorsque les premier et deuxième outils de mélange sont entraînés en rotation, les deuxièmes parties 47, 47' se croisent donc de façon progressive, ce qui limite les chocs sur la préparation. La forme des deuxièmes parties 47, 47' permet donc de pousser progressivement la préparation vers le bas ce qui permet d'obtenir une bonne qualité de mélange.

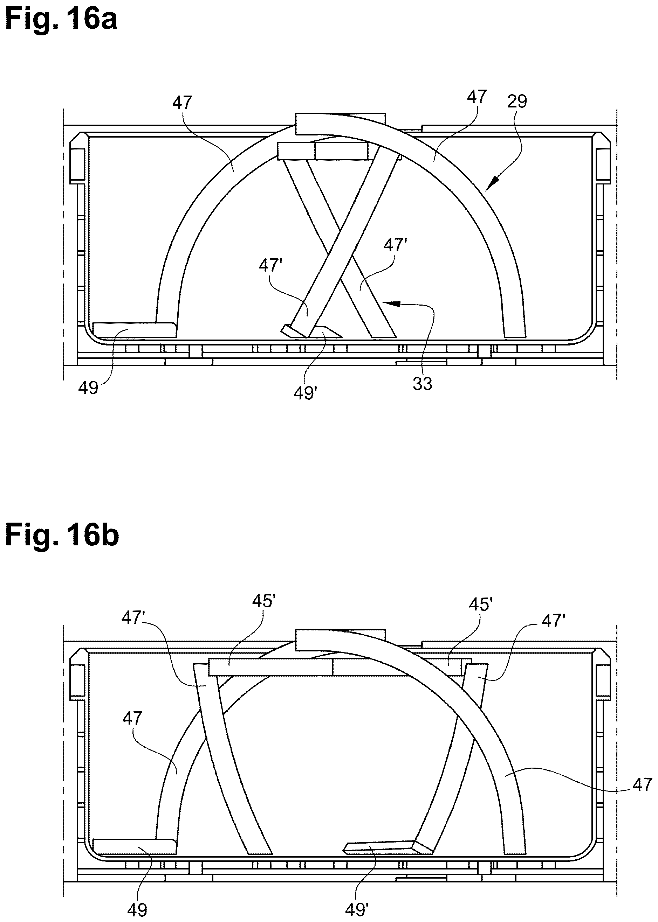

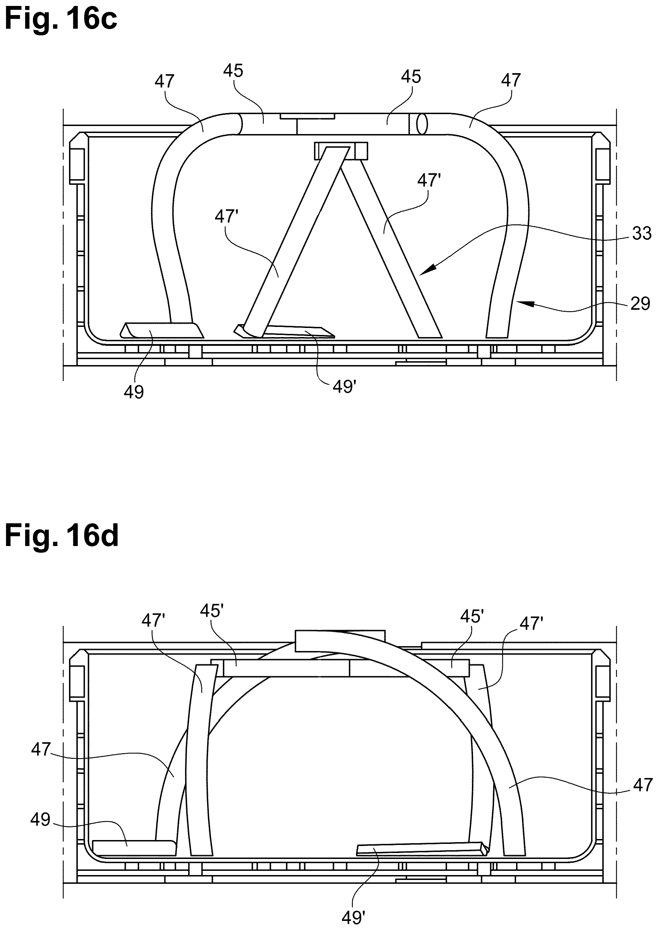

Les figures 16a à 16d représentent plusieurs vues latérales de la cuve de mélange et de la cinquième variante des première et deuxième portions de contact selon différentes positions angulaires des première et deuxième portions de contact.

### Première portion de contact

Selon la cinquième variante de réalisation, le premier outil de mélange 25, par exemple la première portion de contact 29, peut comprendre les deux premières parties 45 et les deux deuxièmes parties 47 et la troisième partie 49.

La première première partie 45, par exemple rectiligne, peut s'étendre selon la direction radiale par rapport aux premier et deuxième axes de rotation X1, X2 vers l'extérieur, par exemple depuis une portion centrale de la première première partie 45 vers une portion distale de la première première partie 45. La section de la première première partie 45, par exemple rectangulaire, peut par exemple diminuer de sa portion centrale vers sa portion distale. La première première partie 45 peut comprendre une surface supérieure, une surface inférieure, par exemple de formes tronconiques, reliées par deux parois latérales et une paroi distale, la paroi distale reliant les deux parois latérales.

La première deuxième partie 47 peut être reliée à la première première partie 45 et s'étendre vers le fond de la cuve de mélange 23. La première deuxième partie 47 peut ainsi comprendre une portion proximale, en contact avec la portion distale de la première première partie 45, et une portion distale, la première deuxième partie 47 s'étendant vers le fond de la cuve de mélange 23 depuis sa portion proximale vers sa portion distale. La première deuxième partie 47 peut présenter une forme incurvée, par exemple de forme tubulaire, par exemple de section circulaire, s'étendant de sa portion proximale à sa portion distale. Une paroi latérale de la portion proximale de la première deuxième partie 47 peut par exemple être en contact avec une paroi latérale de la portion distale de la première première partie 45. En particulier, la forme incurvée de la première deuxième partie 47 peut s'étendre à une distance radiale constante de l'axe de rotation X1. La forme incurvée peut être configurée de sorte à s'étendre de sorte à passer, de la portion proximale s'étendant selon une première direction horizontale et/ou orthogonale à l'axe X1 et/ou orthogonale à la direction radiale dans le référentiel cylindrique associé à l'axe X1, par exemple une première direction tangentielle dans le référentiel cylindrique associé à l'axe X1, à la portion distale s'étendant selon une deuxième direction verticale et/ou parallèle à l'axe X1 et/ou orthogonale à la direction radiale dans le référentiel cylindrique associé à l'axe X1, par exemple différente de la première direction. La première deuxième partie peut ainsi présenter une forme arrondie, en particulier concave vue depuis dessus lorsque le premier outil de mélange est en position de fonctionnement. Une telle forme permet de repousser des ingrédients, par exemple une pâte, vers le bas.

Par direction verticale on entend par exemple une direction parallèle au vecteur gravité lorsque le dispositif de mélange est en position de fonctionnement. Par direction horizontale on entend par exemple une direction orthogonale au vecteur gravité lorsque le dispositif de mélange est en position de fonctionnement.

La deuxième première partie 45, par exemple rectiligne, peut s'étendre selon la direction radiale par rapport aux premier et deuxième axes de rotation X1, X2 vers l'extérieur, par exemple depuis une portion centrale de la deuxième première partie 45 vers une portion distale de la deuxième première partie 45. La section de la deuxième première partie 45, par exemple rectangulaire, peut par exemple diminuer de sa portion centrale vers sa portion distale. La deuxième première partie 45 peut comprendre une surface supérieure, une surface inférieure, par exemple de formes tronconiques, reliées par deux parois latérales et une paroi distale, la paroi distale reliant les deux parois latérales.

La première première partie 45 et la deuxième première partie 45 peuvent par exemple s'étendre de manière opposée selon la direction radiale, par exemple au niveau de leurs portions centrales respectives.

La deuxième deuxième partie 47 peut être reliée à la deuxième première partie 45 et s'étendre vers le fond de la cuve de mélange 23. La deuxième deuxième partie 47 peut ainsi comprendre une portion proximale, en contact avec la portion distale de la deuxième première partie 45, et une portion distale, la deuxième deuxième partie 47 s'étendant vers le fond de la cuve de mélange 23 depuis sa portion proximale vers sa portion distale. La deuxième deuxième partie 47 peut présenter une forme incurvée, et par exemple tubulaire, par exemple de section circulaire, s'étendant de sa portion proximale à sa portion distale. Une paroi latérale de la portion proximale de la deuxième deuxième partie 47 peut par exemple être en contact avec une paroi latérale de la portion distale de la deuxième première partie 45. En particulier, la forme incurvée de la deuxième deuxième partie 47 peut s'étendre à une distance radiale constante de l'axe de rotation X1. La forme incurvée peut être configurée de sorte à s'étendre de sorte à passer, de la portion proximale s'étendant selon une première direction horizontale et/ou orthogonale à l'axe X1 et/ou orthogonale à la direction radiale dans le référentiel cylindrique associé à l'axe X1, par exemple une première direction tangentielle dans le référentiel cylindrique associé à l'axe X1, à la portion distale s'étendant selon une deuxième direction verticale et/ou parallèle à l'axe X1 et/ou orthogonale à la direction radiale dans le référentiel cylindrique associé à l'axe X1, par exemple différente de la première direction. La deuxième deuxième partie peut ainsi présenter une forme arrondie, en particulier concave vue depuis dessus lorsque le premier outil de mélange est en position de fonctionnement. Une telle forme permet de repousser des ingrédients, par exemple une pâte, vers le bas.

Le premier outil de mélange 25, par exemple la première portion de contact 29, peut comprendre la troisième partie 49 s'étendant, par exemple radialement, vers l'extérieur de la cuve de mélange 23 et reliée à la première deuxième parties 47. La troisième partie 49 peut ainsi comprendre une portion proximale, en contact avec la portion distale de la première deuxième partie 47, et une portion distale, la troisième partie 49 s'étendant vers l'extérieur depuis sa portion proximale vers sa portion distale. La troisième partie 49 peut comprendre deux surfaces supérieures, tournées vers le haut de la cuve, par exemple inclinées l'une par rapport à l'autre, et une surface inférieure tournée vers le fond de la cuve, l'une et/ou l'autre des deux surfaces supérieures étant inclinée(s) selon une orientation différente de la verticale et de l'horizontale, les deux surfaces supérieures et la surface inférieure étant par exemple agencées de sorte à ce que la troisième partie 49 présente une section triangulaire. Par exemple, une paroi d'extrémité, correspondant par exemple à une section tubulaire, de la portion distale de la première deuxième partie 47 peut être en contact avec une des deux surfaces supérieures de la troisième partie 49, par exemple de sorte à maintenir libre l'autre surface supérieure de la troisième partie 49. Une telle troisième partie 49 forme un racleur efficace dans les deux sens de rotation. La deuxième deuxième partie 47 peut n'être reliée à aucune troisième partie 49 s'étendant radialement vers l'extérieur, la portion distale de la deuxième deuxième partie 47 formant par exemple une extrémité libre. La première portion de contact 29 peut ainsi comprendre une unique telle troisième partie 49.

### Deuxième portion de contact

Selon la cinquième variante de réalisation, le deuxième outil de mélange 27, par exemple la deuxième portion de contact 33 peut comprendre les deux premières parties 45' et les deux deuxièmes parties 47' et la troisième partie 49'.

La première première partie 45', par exemple rectiligne, peut s'étendre selon la direction radiale par rapport aux premier et deuxième axes de rotation X1, X2 vers l'extérieur, par exemple depuis une portion centrale de la première première partie 45' vers une portion distale de la première première partie 45'. La section de la première première partie 45', par exemple rectangulaire, peut par exemple diminuer de sa portion centrale vers sa portion distale. La première première partie 45' peut comprendre une surface supérieure, une surface inférieure, par exemple de formes tronconiques, reliées par deux parois latérales et une paroi distale, la paroi distale reliant les deux parois latérales.

La première deuxième partie 47' peut être reliée à la première première partie 45' et s'étendre vers le fond de la cuve de mélange 23. La première deuxième partie 47' peut ainsi comprendre une portion proximale, en contact avec la portion distale de la première première partie 45', et une portion distale, la première deuxième partie 47' s'étendant vers le fond de la cuve de mélange 23 depuis sa portion proximale vers sa portion distale. La première deuxième partie 47' peut présenter une forme incurvée, et par exemple tubulaire, par exemple de section circulaire, s'étendant de sa portion proximale à sa portion distale. Une paroi latérale de la portion proximale de la première deuxième partie 47' peut par exemple être en contact avec une paroi latérale de la portion distale de la première première partie 45'. En particulier, la forme incurvée de la première deuxième partie 47' peut s'étendre à une distance radiale constante de l'axe de rotation X2. La forme incurvée peut être une forme d'hélice, par exemple d'hélice circulaire par rapport à un cylindre de révolution ayant pour axe l'axe de rotation X2.

La deuxième première partie 45', par exemple rectiligne, peut s'étendre selon la direction radiale par rapport aux premier et deuxième axes de rotation X1, X2 vers l'extérieur, par exemple depuis une portion centrale de la deuxième première partie 45' vers une portion distale de la deuxième première partie 45'. La section de la deuxième première partie 45', par exemple rectangulaire, peut par exemple diminuer de sa portion centrale vers sa portion distale. La deuxième première partie 45' peut comprendre une surface supérieure, une surface inférieure, par exemple de formes tronconiques, reliées par deux parois latérales et une paroi distale, la paroi distale reliant les deux parois latérales.

La première première partie 45' et la deuxième première partie 45' peuvent par exemple s'étendre de manière opposée selon la direction radiale, par exemple au niveau de leurs portions centrales respectives.

La deuxième deuxième partie 47' peut être reliée à la deuxième première partie 45' et s'étendre vers le fond de la cuve de mélange 23. La deuxième deuxième partie 47' peut ainsi comprendre une portion proximale, en contact avec la portion distale de la deuxième première partie 45', et une portion distale, la deuxième deuxième partie 47' s'étendant vers le fond de la cuve de mélange 23 depuis sa portion proximale vers sa portion distale. La deuxième deuxième partie 47' peut présenter une forme incurvée, et par exemple tubulaire, par exemple de section circulaire, s'étendant de sa portion proximale à sa portion distale. Une paroi latérale de la portion proximale de la deuxième deuxième partie 47' peut par exemple être en contact avec une paroi latérale de la portion distale de la deuxième première partie 45'. En particulier, la forme incurvée de la deuxième deuxième partie 47' peut s'étendre à une distance radiale constante de l'axe de rotation X2. La forme incurvée peut être une forme d'hélice, par exemple d'hélice circulaire par rapport à un cylindre de révolution ayant pour axe l'axe de rotation X2.

Le deuxième outil de mélange 27, par exemple la deuxième portion de contact 33, peut comprendre la troisième partie 49' s'étendant radialement vers l'intérieur de la cuve de mélange 23 et reliée à la première deuxième parties 47'. La troisième partie 49' peut ainsi comprendre une portion proximale, en contact avec la portion distale de la première deuxième partie 47', et une portion distale, la troisième partie 49' s'étendant vers l'extérieur depuis sa portion proximale vers sa portion distale. La troisième partie 49' peut comprendre une surface supérieure, tournée vers le haut de la cuve, et une surface inférieure tournée vers le fond de la cuve, l'une et/ou l'autre des surfaces supérieure et inférieure étant inclinée(s) selon une orientation différente de la verticale et de l'horizontale, par exemple selon la même inclinaison. La surface supérieure et la surface inférieure sont par exemple de formes rectangulaires et connectées par des surfaces latérales. Par exemple, une paroi d'extrémité, correspondant par exemple à une section tubulaire, de la portion distale de la première deuxième partie 47' peut être en contact avec la surface supérieure de la troisième partie 49', par exemple de sorte à maintenir libre la surface inférieure de la troisième partie 49'. Une telle troisième partie 49' forme un racleur efficace quel que soit le sens de rotation. Ceci simplifie la commande du dispositif car il n'est pas nécessaire de commander le deuxième outil de mélange 27 pour l'actionner selon les deux sens de rotation, par exemple lors d'une opération de pétrissage. La deuxième deuxième partie 47' peut n'être reliée à aucune troisième partie 49' s'étendant radialement vers l'intérieur, la portion distale de la deuxième deuxième partie 47' formant par exemple une extrémité libre. La deuxième portion de contact 33 peut ainsi comprendre une unique telle troisième partie 49'.

De tels outils de mélange selon la cinquième variante sont particulièrement adaptés à un fonctionnement avec la cuve de mélange de forme cylindrique, en particulier cylindrique circulaire droite, telle que décrite ci-avant.

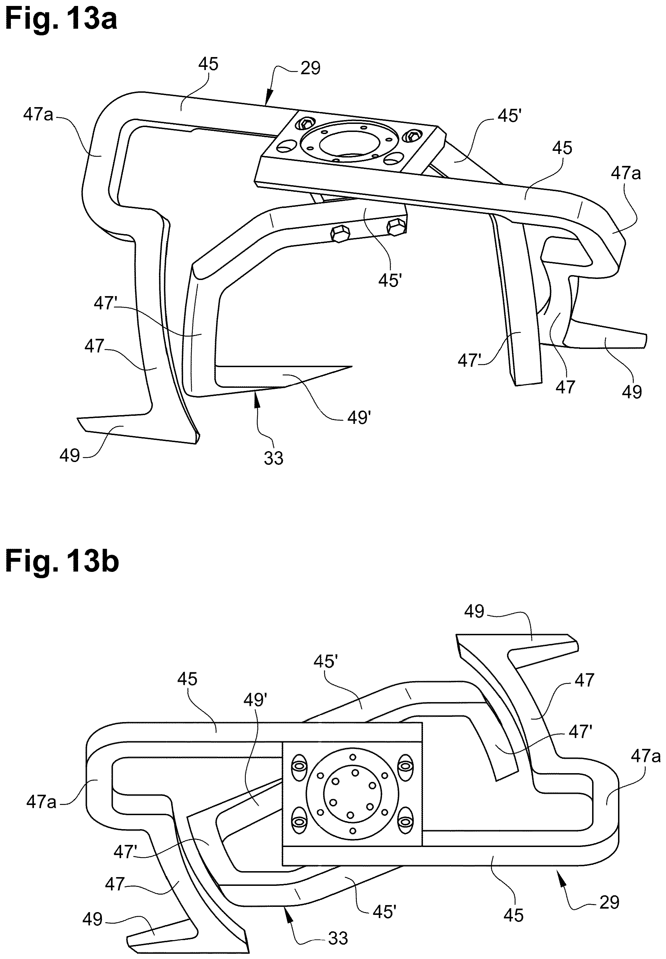

Une sixième variante de réalisation des premier et deuxième outils de mélange 25, 27 est représentée en figures 13a et 13b. Cette sixième variante diffère de la cinquième variante en ce que les deuxièmes parties 47 de la première portion de contact 29 comprennent chacune une portion déportée 47a. Par exemple, au moins une des portions déportées 47a est déportée radialement vers l'extérieur. Par exemple, au moins une des portions déportées 47a pourrait être déportée axialement vers le haut ou bien selon une composante radiale et une composante axiale. Ici, les portions déportées 47a sont situées dans le prolongement des premières parties 45 de la première portion de contact 29. Ici, les portion déportées 47a ont une forme de C débouchant vers les deuxièmes parties 47' de la deuxième portion de contact 33. Par exemple, les deuxièmes parties 47 de la première portion de contact 29, comprennent, dans le prolongement des portions déportées 47a, une portion s'étendant vers le fond de la cuve de mélange 23. Les portions déportées 47a permettent de créer un passage pour la préparation entre les première et deuxième portions de contact 29, 33 et d'éviter que la préparation ne stagne.

Le dispositif de mélange 13 comporte un capot de fermeture 24 configuré pour fermer la cuve de mélange 23 lors d'opérations de mélange d'une préparation. Le capot de fermeture 24 est configuré pour fermer l'ouverture 23e de la cuve de mélange 23 de manière étanche et hermétique de façon à permettre le contrôle des conditions de mélange à l'intérieur de la cuve de mélange 23, comme la pression ou la température à l'intérieur de la cuve de mélange 23.

Le capot de fermeture 24 peut être actionné par un actionneur 26 comprenant par exemple des vérins. Par exemple, sur les figures 1 et 2, le capot de fermeture 24 est relevé et la cuve de mélange 23 est ouverte. Par exemple, sur les figures 3, 4 et 5, le capot de fermeture 24 ferme la cuve de mélange 23.

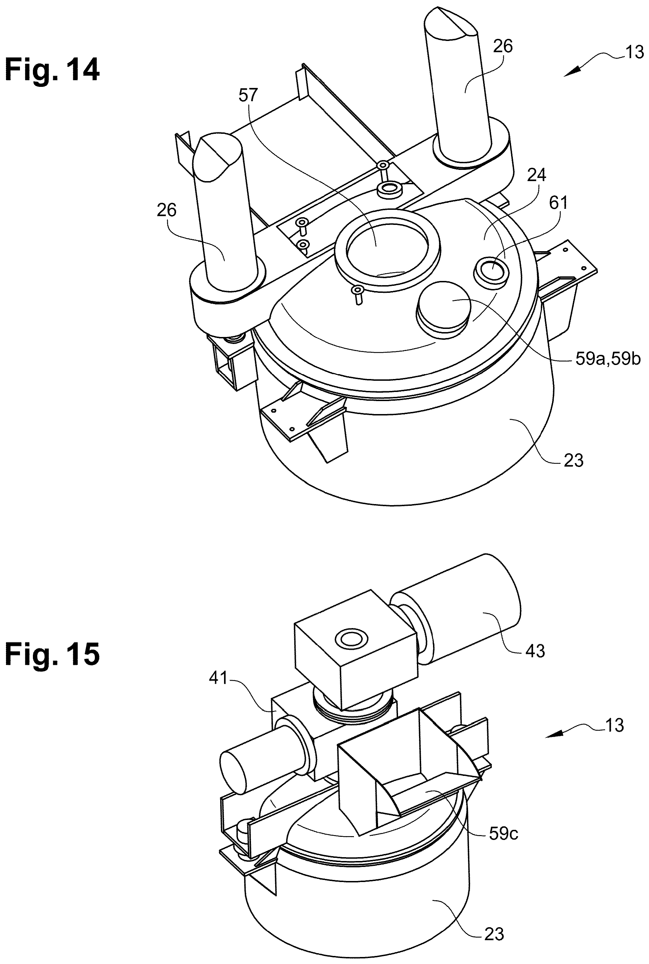

Comme représenté en figure 14, le capot de fermeture 24 comprend un orifice de passage 57 des premier et deuxième outils de mélange 25, 27. Les premier et deuxième outils de mélange 25, 27 sont donc configurés pour s'étendre au travers de l'orifice de passage 57. L'orifice de passage 57 est fermé de manière hermétique autour des premier et deuxième outils de mélange 25, 27.

Comme représenté en figure 14, le capot de fermeture 24 comprend en outre une ouverture d'insertion 59a d'ingrédients dans la cuve de mélange 23 et un couvercle 59b permettant d'ouvrir ou de fermer de manière hermétique l'ouverture d'insertion 59a. L'ouverture d'insertion permet d'ajouter des ingrédients dans la cuve de mélange 23 au cours d'une opération de mélange. La figure 15 représente une variante de réalisation du capot de fermeture 24, dans laquelle le capot de fermeture 24 comprend un élément de guidage 59c des ingrédients, disposé autour de l'ouverture d'insertion 59a. Par exemple, l'élément de guidage 59c comprend une rampe. Par exemple, l'élément de guidage 59c a une forme d'entonnoir.

Comme représenté en figure 14, le capot de fermeture 24 comprend en outre un hublot de visualisation 61, permettant à l'utilisateur de réaliser un contrôle visuel de la préparation lors d'une opération de pétrissage.

Le dispositif de mélange 23 comprend un dispositif de contrôle 28 permettant de contrôler le déroulement d'une opération de mélange d'une préparation. Par exemple, le dispositif de contrôle 28 comprend un microcontrôleur. Par exemple, le dispositif de contrôle 28 comprend une interface utilisateur 30. Le microcontrôleur est configuré pour recevoir des commandes de l'utilisateur via l'interface utilisateur 30. Par exemple, le dispositif de contrôle 28 est configuré pour contrôler l'actionneur 26 du capot de fermeture 24 de la cuve de mélange 23. Par exemple, le dispositif de contrôle 28 est configuré pour contrôler un système de circulation d'un fluide dans l'espace 23c entre la paroi interne 23a et la paroi externe 23b de la cuve de mélange 23.

Par exemple, le dispositif de contrôle 28 est configuré pour contrôler les premier et deuxième mécanismes d'actionnement 41, 43. En particulier, le dispositif de contrôle 28 permet de contrôler la vitesse et le sens de rotation de chacun des premier et deuxième outils de mélange 25, 27. Par exemple, les premier et deuxième mécanismes d'actionnement 41, 43 sont configurés pour communiquer avec le microcontrôleur par une liaison filaire ou bien selon un protocole sans fil de type Bluetooth^{®} ou WIFI.

En particulier, le dispositif de contrôle 28 peut permettre de contrôler la vitesse et le sens de rotation de chacun des premier et deuxième outils de mélange 25, 27 indépendamment de l'autre des premier et deuxième outils de mélange 25, 27.

Par exemple, le dispositif de contrôle 28 comprend au moins un capteur, par exemple un capteur de pression et/ou un capteur de température et/ou un capteur hygrométrique et/ou un capteur d'humidité de la préparation. L'au moins un capteur est configuré pour transmettre des données au microcontrôleur. Par exemple, l'au moins un capteur est configuré pour communiquer avec le microcontrôleur selon un protocole sans fil de type Bluetooth^{®} ou WIFI.

Par exemple, le dispositif de contrôle 28 comprend un minuteur relié au microcontrôleur.

Par exemple, le dispositif de mélange 13 comprend un dispositif d'injection de gaz, tel que l'azote dans la cuve de mélange 23. Le dispositif d'injection de gaz est configuré pour être contrôlé par le dispositif de contrôle 28. Le dispositif d'injection de gaz est relié au microcontrôleur.

Par exemple, l'utilisateur peut envoyer une commande via l'interface utilisateur 30 de mélanger une préparation avec une élévation de température de la préparation sensiblement comprise entre 5 et 6 degrés Celsius pour un temps de mélange sensiblement égal à 8 minutes.

Par exemple, l'utilisateur peut envoyer une commande via l'interface utilisateur 30 de mélanger une préparation avec une hydratation de la préparation sensiblement comprise entre 45% et 80%.

La cuve de mélange 23 comporte en outre une ouverture de vidange 51 et une trappe de vidange 53 qui est montée mobile entre une position de vidange dans laquelle la trappe de vidange 53 libère l'ouverture de vidange 51 et le contenu de la cuve de mélange 23 peut être déversé en dehors de ladite cuve de mélange 23 à travers l'ouverture de vidange 51, et une position d'obturation dans laquelle la trappe de vidange 53 obture l'ouverture de vidange 51 et le contenu de la cuve de mélange 23 ne peut pas être déversé en dehors de ladite cuve de mélange 23 via l'ouverture de vidange 51. L'ouverture de vidange 51 est ménagée sur une paroi de fond de la cuve de mélange 23.

Lors d'une opération de mélange et de pétrissage, la trappe de vidange 53 est dans la position d'obturation. Lorsque l'opération est terminée, la préparation pétrie est déversée par l'ouverture de vidange. La préparation pétrie peut être réceptionnée dans une cuve 55, comme représenté en figure 2. L'ensemble de mélange 11 peut également comprendre un convoyeur, disposé sous l'ouverture de vidange 51 et permettant de recueillir la préparation pétrie, puis de la déplacer.

La cuve de mélange 23 étant fixe, l'installation d'une trappe de vidange 53 sur la cuve de mélange 23 et la vidange du contenu de la cuve de mélange 23 sont facilitées.

Bien que la présente invention ait été décrite en se référant à des modes de réalisation spécifiques, il est entendu que des modifications et des changements peuvent être effectués sur ces exemples sans sortir de la portée générale de l'invention telle que définie par les revendications. En particulier, des caractéristiques individuelles des différents modes de réalisation illustrés / mentionnés peuvent être combinées dans des modes de réalisation additionnels. La description et les dessins doivent être considérés dans un sens illustratif plutôt que restrictif.

## Revendications

1. Dispositif de mélange (13) configuré pour mélanger une préparation boulangère, pâtissière ou cosmétique comprenant :
• une cuve de mélange (23) configurée pour recevoir des ingrédients destinés à être mélangés pour former la préparation ;
• un premier outil de mélange (25) configuré pour plonger au moins partiellement dans la cuve de mélange (23) et configuré pour mélanger les ingrédients et/ou la préparation, le premier outil de mélange (25) étant configuré pour être entraîné en rotation autour d'un premier axe de rotation (X1) ;
• un deuxième outil de mélange (27) configuré pour plonger au moins partiellement dans la cuve de mélange (23) et configuré pour mélanger les ingrédients et/ou la préparation, le deuxième outil de mélange (27) étant configuré pour être entraîné en rotation autour d'un deuxième axe de rotation (X2), les premier et deuxième axes de rotation (X1, X2) étant sensiblement coaxiaux,
dans lequel :
- le premier outil de mélange (25) comprend une deuxième partie de mélange (47) disposée dans la cuve de mélange (23) et s'étendant vers un fond de la cuve de mélange (23), et dans lequel le deuxième outil de mélange (27) comprend une deuxième partie de mélange (47') disposée dans la cuve de mélange (23) et s'étendant vers un fond de la cuve de mélange (23),
- les deuxièmes parties de mélange (47, 47') sont incurvées, la forme des deuxièmes parties (47, 47') permettant de pousser progressivement la préparation vers le bas,
**caractérisé en ce que**:
- au moins l'un des premier et deuxième outils de mélange (25, 27) comprend une partie de raclage (49, 49') s'étendant selon une direction radiale par rapport aux premier et deuxième axes de rotation (X1, X2) et étant adjacente au fond de la cuve de mélange (23).

2. Dispositif de mélange (13) selon l'une quelconque des revendications précédentes, dans lequel les deuxièmes parties (47, 47') sont chacune en forme de spire.

3. Dispositif de mélange (13) selon l'une quelconque des revendications précédentes, dans lequel au moins l'une des deuxièmes parties de mélange (47, 47') comprend une portion rectiligne, et/ou dans lequel au moins l'une des deuxièmes parties de mélange (47, 47') comprend une portion s'étendant selon une direction axiale par rapport aux premier et deuxième axes de rotation (X1, X2) respectivement, et/ou dans lequel au moins l'une des deuxièmes parties de mélange (47, 47') comprend une portion inclinée par rapport à une direction axiale par rapport aux premier et deuxième axes de rotation (X1, X2), et/ou dans lequel au moins l'une des première et deuxième parties de mélange (47, 47') comprend une portion déportée (47a) configurée pour former un passage pour la préparation entre les première et deuxième parties de mélange (47, 47').

4. Dispositif de mélange (13) selon l'une quelconque des revendications précédentes, dans lequel :
- le premier outil de mélange (25) comprend deux deuxièmes parties (47) s'étendant vers le fond de la cuve de mélange (23), les deux deuxièmes parties (47) présentant chacune une forme incurvée, et une troisième partie (49) s'étendant radialement vers l'extérieur de la cuve de mélange (23) et reliée à l'une des deux deuxièmes parties (47), et
- le deuxième outil de mélange (27) comprend deux deuxièmes parties (47') s'étendant vers le fond de la cuve de mélange (23), les deux deuxièmes parties (47') présentant chacune une forme incurvée, et une troisième partie (49') s'étendant radialement vers l'intérieur de la cuve de mélange (23) et reliée à l'une des deux deuxièmes parties (47').

5. Dispositif de mélange (13) selon la revendication précédente, dans lequel la forme incurvée de chacune des deux deuxièmes parties (47) du premier outil de mélange (25) s'étend à une distance radiale constante du premier axe de rotation (X1), et dans lequel la forme incurvée de chacune des deux deuxièmes parties (47') du deuxième outil de mélange (27) s'étend à une distance radiale constante du deuxième axe de rotation (X2).

6. Dispositif de mélange (13) selon la revendication 4 ou 5, dans lequel :
- la troisième partie (49) du premier outil de mélange (25) comprend deux surfaces supérieures, tournées vers le haut de la cuve, par exemple inclinées l'une par rapport à l'autre, et une surface inférieure tournée vers le fond de la cuve, les deux surfaces supérieures et la surface inférieure étant par exemple agencées de sorte à ce que la troisième partie (49) présente une section triangulaire, et
- la troisième partie (49') du deuxième outil de mélange (27) comprend une surface supérieure, tournée vers le haut de la cuve, et une surface inférieure tournée vers le fond de la cuve, inclinées selon la même inclinaison.

7. Dispositif de mélange (13) selon l'une quelconque des revendications 4 à 6, dans lequel :
- le premier outil de mélange (25) comprend deux premières parties (45), s'étendant selon la direction radiale par rapport aux premier et deuxième axes de rotation (X1, X2) vers l'extérieur, chacune des deux premières parties (45) étant reliée à l'une respective des deuxièmes parties (47) du premier outil de mélange (25), les deux premières parties (45) s'étendant de manière opposée selon la direction radiale, et
- le deuxième outil de mélange (27) comprend deux premières parties (45'), s'étendant selon la direction radiale par rapport aux premier et deuxième axes de rotation (X1, X2) vers l'extérieur, chacune des deux premières parties (45') étant reliée à l'une respective des deuxièmes parties (47') du deuxième outil de mélange (27).

8. Dispositif de mélange (13) selon l'une quelconque des revendications 4 à 7, dans lequel la cuve de mélange (23) comprend une paroi latérale (23a) présentant une forme de cylindre circulaire droit.

9. Dispositif de mélange (13) selon l'une quelconque des revendications précédentes, dans lequel la cuve de mélange (23) comporte une ouverture de vidange, et une trappe de vidange qui est montée mobile entre une position de vidange dans laquelle la trappe de vidange libère l'ouverture de vidange et le contenu de la cuve de mélange peut être déversé en dehors de la cuve de mélange (23) à travers l'ouverture de vidange, et une position d'obturation dans laquelle la trappe de vidange obture l'ouverture de vidange.

10. Dispositif de mélange (13) selon l'une quelconque des revendications précédentes, lequel comprend en outre un premier mécanisme d'entraînement (41) configuré pour entraîner en rotation le premier outil de mélange (25) autour du premier axe de rotation (X1), et un deuxième mécanisme d'entraînement (43) configuré pour entraîner en rotation le deuxième outil de mélange (27) autour du deuxième axe de rotation (X2) , dans lequel le premier outil de mélange (25) et le deuxième outil de mélange (27) sont configurés pour être entraînés en rotation selon un même sens de rotation ou selon deux sens de rotation opposés.

11. Dispositif de mélange (13) selon la revendication 10, dans lequel le premier mécanisme d'entraînement (41) est configuré pour entraîner directement le premier outil de mélange (25) en rotation, et le deuxième mécanisme d'entraînement (43) est configuré pour entraîner directement le deuxième outil de mélange (27) en rotation.

12. Dispositif de mélange (13) selon la revendication 10 ou 11, dans lequel le premier outil de mélange (25) comprend une première portion d'entraînement (31) configurée pour être entraînée en rotation autour du premier axe de rotation (X1) par le premier mécanisme d'entrainement (41), et le deuxième outil de mélange (27) comprend une deuxième portion d'entraînement (35), configurée pour être entraînée en rotation autour du deuxième axe de rotation (X2) par le deuxième mécanisme d'entraînement (43), la première portion d'entraînement (31) étant disposée autour de la deuxième portion d'entraînement (35).

13. Dispositif de mélange (13) selon l'une quelconque des revendications précédentes, comprenant un capot de fermeture (24) configuré pour fermer de façon hermétique la cuve de mélange (23).

14. Ensemble de mélange (11) comprenant un dispositif de mélange (13) conforme à l'une quelconque des revendications 1 à 13, et un bâti (15), la cuve de mélange (23) du dispositif de mélange (13) étant configurée pour être montée sur un bâti (15), la cuve de mélange (23) étant fixe par rapport au bâti (15).

## Patentansprüche

1. Mischvorrichtung (13), die so eingerichtet ist, dass sie eine Back-, Gebäck- oder kosmetische Zubereitung mischt, umfassend:
• einen Mischbehälter (23), der so eingerichtet ist, dass er Zutaten aufnimmt, die gemischt werden sollen, um die Zubereitung zu bilden;
• ein erstes Mischwerkzeug (25), das so eingerichtet ist, dass es zumindest teilweise in den Mischbehälter (23) eintaucht, und das so eingerichtet ist, dass es die Zutaten und/oder die Zubereitung mischt, wobei das erste Mischwerkzeug (25) so eingerichtet ist, dass es um eine erste Drehachse (X1) drehangetrieben wird;
• ein zweites Mischwerkzeug (27), das so eingerichtet ist, dass es zumindest teilweise in den Mischbehälter (23) eintaucht, und das so eingerichtet ist, dass es die Zutaten und/oder die Zubereitung mischt, wobei das zweite Mischwerkzeug (27) so eingerichtet ist, dass es um eine zweite Drehachse (X2) drehangetrieben wird, wobei die erste und die zweite Drehachse (X1, X2) im Wesentlichen koaxial sind,
wobei:
- das erste Mischwerkzeug (25) einen zweiten Mischteil (47) umfasst, der im Mischbehälter (23) angeordnet ist und sich zu einem Boden des Mischbehälters (23) erstreckt, und wobei das zweite Mischwerkzeug (27) einen zweiten Mischteil (47') umfasst, der im Mischbehälter (23) angeordnet ist und sich zu einem Boden des Mischbehälters (23) erstreckt,
- die zweiten Mischteile (47, 47') gekrümmt sind, wobei die Form der zweiten Teile (47, 47') es ermöglicht, die Zubereitung schrittweise nach unten zu drücken,
**dadurch gekennzeichnet, dass**:
- mindestens eines des ersten und des zweiten Mischwerkzeugs (25, 27) einen Abstreifabschnitt (49, 49') umfasst, der sich in einer radialen Richtung in Bezug auf die erste und die zweite Drehachse (X1, X2) erstreckt und an den Boden des Mischbehälters (23) angrenzt.

2. Mischvorrichtung (13) nach einem der vorhergehenden Ansprüche, wobei die zweiten Teile (47, 47') jeweils spiralenförmig sind.

3. Mischvorrichtung (13) nach einem der vorhergehenden Ansprüche, wobei mindestens einer der zweiten Mischteile (47, 47') einen geradlinigen Abschnitt umfasst, und/oder wobei mindestens einer der zweiten Mischteile (47, 47') einen Abschnitt umfasst, der sich in einer axialen Richtung in Bezug auf die erste und die zweite Drehachse (X1, X2) erstreckt, und/oder wobei mindestens einer der zweiten Mischteile (47, 47') einen in Bezug auf die erste und die zweite Drehachse (X1, X2) geneigten Abschnitt umfasst, und/oder wobei mindestens einer der ersten und zweiten Mischteile (47, 47') einen abgesetzten Abschnitt (47a) umfasst, der so eingerichtet ist, dass er einen Durchgang für die Zubereitung zwischen dem ersten und zweiten Mischteil (47, 47') bildet.

4. Mischvorrichtung (13) nach einem der vorhergehenden Ansprüche, wobei:
- das erste Mischwerkzeug (25) zwei zweite Teile (47) umfasst, die sich zum Boden des Mischbehälters (23) erstrecken, wobei die beiden zweiten Teile (47) jeweils eine gekrümmte Form aufweisen, und ein dritter Teil (49) sich radial zur Außenseite des Mischbehälters (23) erstreckt und mit einem der beiden zweiten Teile (47) verbunden ist, und
- das zweite Mischwerkzeug (27) zwei zweite Teile (47') umfasst, die sich zum Boden des Mischbehälters (23) erstrecken, wobei die beiden zweiten Teile (47') jeweils eine gekrümmte Form aufweisen, und ein dritter Teil (49') sich radial in das Innere des Mischbehälters (23) erstreckt und mit einem der beiden zweiten Teile (47') verbunden ist.

5. Mischvorrichtung (13) nach dem vorhergehenden Anspruch, wobei sich die gekrümmte Form jedes der beiden zweiten Teile (47) des ersten Mischwerkzeugs (25) in einem konstanten radialen Abstand von der ersten Drehachse (X1) erstreckt, und wobei sich die gekrümmte Form jedes der beiden zweiten Teile (47') des zweiten Mischwerkzeugs (27) in einem konstanten radialen Abstand von der zweiten Drehachse (X2) erstreckt.

6. Mischvorrichtung (13) nach Anspruch 4 oder 5, wobei:
- der dritte Teil (49) des ersten Mischwerkzeugs (25) zwei obere Oberflächen, die zur Oberseite des Behälters gedreht, beispielsweise zueinander geneigt, sind, und eine untere Oberfläche, die zum Boden des Behälters gedreht ist, umfasst, wobei die beiden oberen Oberflächen und die untere Oberfläche beispielsweise so angeordnet sind, dass der dritte Teil (49) einen dreieckigen Querschnitt aufweist, und
- der dritte Teil (49') des zweiten Mischwerkzeugs (27) eine obere Oberfläche, die zur Oberseite des Behälters gedreht ist, und eine untere Oberfläche, die zum Boden des Behälters gedreht ist, umfasst, die in derselben Neigung geneigt sind.

7. Mischvorrichtung (13) nach einem der Ansprüche 4 bis 6, wobei:
- das erste Mischwerkzeug (25) zwei erste Teile (45) umfasst, die sich in radialer Richtung in Bezug auf die erste und zweite Drehachse (X1, X2) nach außen erstrecken, wobei jeder der beiden ersten Teile (45) mit einem der jeweiligen zweiten Teile (47) des ersten Mischwerkzeugs (25) verbunden ist, wobei die beiden ersten Teile (45) sich in radialer Richtung gegenüberliegend erstrecken, und
- das zweite Mischwerkzeug (27) zwei erste Teile (45') umfasst, die sich in radialer Richtung in Bezug auf die erste und zweite Drehachse (X1, X2) nach außen erstrecken, wobei jeder der beiden ersten Teile (45') mit einem der jeweiligen zweiten Teile (47') des zweiten Mischwerkzeugs (27) verbunden ist.

8. Mischvorrichtung (13) nach einem der Ansprüche 4 bis 7, wobei der Mischbehälter (23) eine seitliche Wand (23a) umfasst, die eine gerade kreisförmige Zylinderform aufweist.

9. Mischvorrichtung (13) nach einem der vorhergehenden Ansprüche, wobei der Mischbehälter (23) eine Ablassöffnung und eine Ablassklappe aufweist, die beweglich zwischen einer Ablassposition, in der die Ablassklappe die Ablassöffnung freigibt und der Inhalt des Mischbehälters durch die Ablassöffnung aus dem Mischbehälter (23) abgelassen werden kann, und eine Verschlussposition, in der die Ablassklappe die Ablassöffnung verschließt, montiert ist.

10. Mischvorrichtung (13) nach einem der vorhergehenden Ansprüche, die ferner einen ersten Antriebsmechanismus (41) umfasst, der so eingerichtet ist, dass er das erste Mischwerkzeug (25) um die erste Drehachse (X1) in Drehung antreibt, und einen zweiten Antriebsmechanismus (43), der so eingerichtet ist, dass er das zweite Mischwerkzeug (27) um die zweite Drehachse (X2) in Drehung antreibt, wobei das erste Mischwerkzeug (25) und das zweite Mischwerkzeug (27) so eingerichtet sind, dass sie in derselben Drehrichtung oder in zwei entgegengesetzten Drehrichtungen drehangetrieben werden.

11. Mischvorrichtung (13) nach Anspruch 10, wobei der erste Antriebsmechanismus (41) so eingerichtet ist, dass er das erste Mischwerkzeug (25) direkt in Drehung antreibt, und der zweite Antriebsmechanismus (43) so eingerichtet ist, dass er das zweite Mischwerkzeug (27) direkt in Drehung antreibt.

12. Mischvorrichtung (13) nach Anspruch 10 oder 11, wobei das erste Mischwerkzeug (25) einen ersten Antriebsabschnitt (31) umfasst, der so eingerichtet ist, dass er von dem ersten Antriebsmechanismus (41) um die erste Drehachse (X1) drehangetrieben wird, und das zweite Mischwerkzeug (27) einen zweiten Antriebsabschnitt (35) umfasst, der so eingerichtet ist, dass er von dem zweiten Antriebsmechanismus (43) um die zweite Drehachse (X2) drehangetrieben wird, wobei der erste Antriebsabschnitt (31) um den zweiten Antriebsabschnitt (35) herum angeordnet ist.

13. Mischvorrichtung (13) nach einem der vorhergehenden Ansprüche, umfassend einen Verschlussdeckel (24), der so eingerichtet ist, dass er den Mischbehälter (23) hermetisch verschließt.

14. Mischeinheit (11), umfassend eine Mischvorrichtung (13) nach einem der Ansprüche 1 bis 13 und ein Gestell (15), wobei der Mischbehälter (23) der Mischvorrichtung (13) so eingerichtet ist, dass er auf einem Gestell (15) montiert ist, wobei der Mischbehälter (23) in Bezug auf das Gestell (15) fest ist.

## Claims

1. A mixing device (13) configured to mix a bakery, pastry or cosmetic preparation comprising:
• a mixing tank (23) configured to receive ingredients intended to be mixed to form the preparation;
• a first mixing tool (25) configured to be immersed at least partially in the mixing tank (23) and configured to mix the ingredients and/or the preparation, the first mixing tool (25) being configured to be driven in rotation around a first axis of rotation (X1);
• a second mixing tool (27) configured to be immersed at least partially in the mixing tank (23) and configured to mix the ingredients and/or the preparation, the second mixing tool (27) being configured to be driven in rotation around a second axis of rotation (X2), the first and second axes of rotation (X1, X2) being substantially coaxial,
wherein:
- the first mixing tool (25) comprises a second mixing part (47) disposed within the mixing tank (23) and extending towards a bottom of the mixing tank (23), and wherein the second mixing tool (27) comprises a second mixing part (47') disposed within the mixing tank (23) and extending towards a bottom of the mixing tank (23),
- the second mixing parts (47, 47') are curved, the shape of the second parts (47, 47') making it possible to progressively push the preparation downwards,
**characterized in that**:
- at least one of the first and second mixing tools (25, 27) comprises a scraping part (49, 49') extending in a radial direction with respect to the first and second axes of rotation (X1, X2) and being adjacent to the bottom of the mixing tank (23).

2. The mixing device (13) according to any one of the preceding claims, wherein the second parts (47, 47') each have the shape of a coil.

3. The mixing device (13) according to any one of the preceding claims, wherein at least one of the second mixing parts (47, 47') comprises a rectilinear portion, and/or wherein at least one of the second mixing parts (47, 47') comprises a portion extending in an axial direction with respect to the first and second axes of rotation (X1, X2) respectively, and/or wherein at least one of the second mixing parts (47, 47') comprises a portion inclined with respect to an axial direction with respect to the first and second axes of rotation (X1, X2), and/or wherein at least one of the first and second mixing parts (47, 47') comprises an offset portion (47a) configured to form a passage for the preparation between the first and second mixing parts (47, 47').

4. The mixing device (13) according to any one of the preceding claims, wherein:
- the first mixing tool (25) comprises two second parts (47) extending towards the bottom of the mixing tank (23), the two second parts (47) each having a curved shape, and a third part (49) extending radially towards the outside of the mixing tank (23) and connected to one of the two second parts (47), and
- the second mixing tool (27) comprises two second parts (47') extending towards the bottom of the mixing tank (23), the two second parts (47') each having a curved shape, and a third part (49') extending radially towards the inside of the mixing tank (23) and connected to one of the two second parts (47').

5. The mixing device (13) according the preceding claim, wherein the curved shape of each of the two second parts (47) of the first mixing tool (25) extends at a constant radial distance from the first axis of rotation (X1), and wherein the curved shape of each of the two second parts (47') of the second mixing tool (27) extends at a constant radial distance from the second axis of rotation (X2).

6. The mixing device (13) according to claim 4 or 5, wherein:
- the third part (49) of the first mixing tool (25) comprises two upper surfaces, facing the top of the tank, for example inclined relative to each other, and a lower surface facing the bottom of the tank, the two upper surfaces and the lower surface being for example arranged such that the third part (49) has a triangular section, and
- the third part (49') of the second mixing tool (27) comprises an upper surface, facing the top of the tank, and a lower surface facing the bottom of the tank, which are inclined according to the same inclination.

7. The mixing device (13) according to any one of claims 4 to 6, wherein:
- the first mixing tool (25) comprises two first parts (45), extending in the radial direction with respect to the first and second axes of rotation (X1, X2) outwards, each of the two first parts (45) being connected to a respective one of the second parts (47) of the first mixing tool (25), the two first parts (45) extending oppositely in the radial direction, and
- the second mixing tool (27) comprises two first parts (45'), extending in the radial direction with respect to the first and second axes of rotation (X1, X2) outwards, each of the two first parts (45') being connected to a respective one of the second parts (47') of the second mixing tool (27).

8. The mixing device (13) according to any one of claims 4 to 7, wherein the mixing tank (23) comprises a side wall (23a) having the shape of a right circular cylinder.

9. The mixing device (13) according to any one of the preceding claims, wherein the mixing tank (23) includes a discharge opening, and a discharge gate which is movably mounted between a discharge position in which the discharge gate releases the discharge opening and the contents of the mixing tank may be poured out of the mixing tank (23) through the discharge opening, and a blocking position in which the discharge gate blocks the discharge opening.

10. The mixing device (13) according to any one of the preceding claims which further comprises a first drive mechanism (41) configured to drive the first mixing tool (25) in rotation around the first axis of rotation (X1), and a second drive mechanism (43) configured to drive the second mixing tool (27) in rotation around the second axis of rotation (X2), wherein the first mixing tool (25) and the second mixing tool (27) are configured to be driven in rotation in the same direction of rotation or according to two opposite directions of rotation.

11. The mixing device (13) according to claim 10, wherein the first drive mechanism (41) is configured to directly drive the first mixing tool (25) in rotation, and the second drive mechanism (43) is configured to directly drive the second mixing tool (27) in rotation.

12. The mixing device (13) according to claim 10 or 11, wherein the first mixing tool (25) comprises a first drive portion (31) configured to be driven in rotation around the first axis of rotation (X1) by the first drive mechanism (41), and the second mixing tool (27) comprises a second drive portion (35), configured to be driven in rotation around the second axis of rotation (X2) by the second drive mechanism (43), the first drive portion (31) being disposed around the second drive portion (35).

13. The mixing device (13) according to any one of the preceding claims, comprising a closure cap (24) configured to close in an airtight manner the mixing tank (23).

14. A mixing assembly (11) comprising a mixing device (13) according to any one of claims 1 to 13, and a frame (15), the mixing tank (23) of the mixing device (13) being configured to be mounted on a frame (15), the mixing tank (23) being stationary relative to the frame (15).
